# EUROPÄISCHE PATENTSCHRIFT

(11) **EP 1 438 886 B1**
(45) Veröffentlichungstag und Bekanntmachung des Hinweises auf die Patenterteilung: **21.04.2010**
(21) Anmeldenummer: 04000770.0
(22) Anmeldetag: 15.01.2004
(51) Int. Cl.: A01B 59/06

(54) **Kopplungsvorrichtung**
Coupling device
Dispositif d'accouplement

(30) Priorität: 16.01.2003 US 346881; 14.01.2004 US 757889
(43) Veröffentlichungstag der Anmeldung: 21.07.2004
(73) Patentinhaber: DEERE & COMPANY, Moline, Illinois 61265-8098 (US)
(72) Erfinder: Schlesser, Walter Mark, Ottumwa, IA 52501 (US); Kraus, Timothy J., Hedrick, IA 52563 (US)
(74) Vertreter: Magin, Ludwig Bernhard

(56) Entgegenhaltungen:
- EP-A- 0 632 953
- DE-A- 3 607 257
- US-A- 6 089 328
- US-B1- 6 230 817
- US-B1- 6 253 859

## Beschreibung

Die Erfindung betrifft eine Kopplungsvorrichtung nach dem Oberbegriff des Anspruchs 1, insbesondere einen Dreipunkt-Geräteanbau für ein industrielles oder landwirtschaftliches Nutzfahrzeug, beispielsweise einen Traktor.

Eine Vielzahl unterschiedlicher Arbeitsgeräte sind mit herkömmlichen Kopplungsvorrichtungen (Geräteanbauten, Hitch-Systemen) kompatibel, insbesondere mit herkömmlichen Dreipunkt-Geräteanbauten. Viele Arbeitsgeräte, beispielsweise Mähwerke beziehungsweise Mähaufbereiter, Schneepflüge und so weiter, benötigen zusätzlich zur Höhenansteuerung eine Schwimmstellung bzw. einen Ausgleich hinsichtlich Kipp-, Dreh- oder Schwenkbewegungen quer zur Nutzfahrzeugslängsachse und/oder eine Federung, um eine befriedigende Funktionalität sicherzustellen und Beschädigungen zu verhindern. Derzeit ist beispielsweise eine solche Ausgleichsbewegung in herkömmlichen Dreipunkt-Geräteaufbauten nicht verfügbar und muss vom Arbeitsgerät zur Verfügung gestellt werden.

Die der Erfindung zugrundeliegende Aufgabe wird darin gesehen, eine Kopplungsvorrichtung der eingangs genannten Art anzugeben, durch die die vorgenannten Probleme überwunden werden. Insbesondere soll eine Kopplungsvorrichtung angegeben und weitergebildet werden, die eine Ausgleichsbewegung zur Verfügung stellt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Kopplungsvorrichtung stellt somit eine Ausgleichsbewegung für ein an ein Fahrzeug koppelbares Arbeitsgerät zur Verfügung, wobei auch bestehende konventionelle Kopplungsvorrichtungen, insbesondere Dreipunkt-Geräteanbauten, mit wenigen Modifikationen aufgerüstet werden können. Insbesondere weisen bei der erfindungsgemäßen Kopplungsvorrichtung die üblicherweise vorgesehenen Hubstreben Hydraulikzylinder auf, welche entweder jeweils an einen eigenen Hydrospeicher oder welche gemeinsamen an den gleichen bzw. einen gemeinsamen Hydrospeicher koppelbar sind. Die erfindungsgemäße Kopplungsvorrichtung ist insbesondere für Arbeitsgeräte geeignet, die eine große Fläche bearbeiten. Mit ihr können vorgebbare Vorspannkräfte auf ein Arbeitsgerät übertragen werden, so dass ein vorgebbarer Gewichtsanteil eines Arbeitsgeräts auf die Unterlenker getragen bzw. ausgeglichen ist, um während des Betriebs des Arbeitsgeräts einen vorgegebenen bzw. gewünschten Druck auf den Untergrund auszuüben bzw. zu übertragen. Bei der Verwendung einzelner Hydrospeicher kann ein seitlicher Gewichtsausgleich erzielt werden, da unterschiedliche Hydrospeicher-Einstellungen verwendet werden können.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: in einer perspektivischen Ansicht eine schematische Darstellung einer in Form eines Dreipunkt-Geräteaufbaus eines Traktors ausgebildete Kopplungsvorrichtung, wie sie aus dem Stand der Technik bekannt ist,
- Fig. 2: eine der Figur 1 vergleichbare schematische Darstellung in einer perspektivischen Ansicht ein erfindungsgemäßes Ausführungsbeispiel einer in Form eines Dreipunkt-Geräteaufbaus eines Traktors ausgebildeten Kopplungsvorrichtung,
- Fig. 3: in einer schematischen Darstellung eine Ansteuerschaltung gemäß eines ersten erfindungsgemäßen Ausführungsbeispiels,
- Fig. 4: in einer schematischen Darstellung eine Ansteuerschaltung eines zweiten erfindungsgemäßen Ausführungsbeispiels,
- Fig. 5: in einer schematischen Darstellung eine Ansteuerschaltung gemäß eines dritten erfindungsgemäßen Ausführungsbeispiels und
- Fig. 6: in einer schematischen Darstellung eine Ansteuerschaltung gemäß eines vierten erfindungsgemäßen Ausführungsbeispiels.

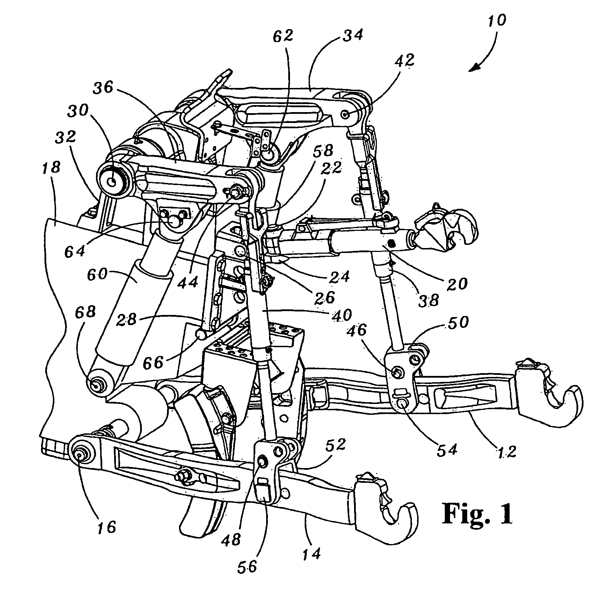

Fig. 1 zeigt eine in Form eines Dreipunkt-Geräteaufbaus 10 ausgeführte Kopplungsvorrichtung für einen Traktor, wie sie aus dem Stand der Technik bekannt ist. Der Dreipunkt-Geräteaufbau 10 kann entweder an der Vorder- oder Hinterseite eines Fahrzeugs angebracht werden. Der Dreipunkt-Geräteaufbau 10 umfasst auf der rechten und linken Seite Arme oder Unterlenker 12, 14, welche zur vertikalen Drehung um eine horizontal und quer angeordnete Achse befestigt sind, welche durch eine an dem Rahmen 18 des Trägerfahrzeugs montierte und quer angeordnete Welle 16 definiert ist. Ein dritter Arm bzw. ein Oberlenker 20 weist ein längenverstellbares Spannschloss bzw. eine Hubspindel auf und umfasst ein Ende, welches drehbar um den an einem gabelförmigen Ende einer Gelenkwellengabel 24 angeordneten Bolzen 22 verbunden ist. Das andere Ende der Gelenkwellengabel 24 ist zur vertikalen Drehung um einen horizontal und quer hierzu angeordneten Bolzen 26 angeordnet, wobei der Bolzen 26 an einer Konsole 28 angeordnet ist, welche an einer mittigen Stelle oberhalb und zwischen den Unterlenkern 12, 14 an dem Fahrzeugrahmen 18 angeschraubt ist. Eine horizontal und quer ausgerichtete Hubwelle 30 ist zur Drehung bzw. Rotation innerhalb eines Trägerteils 32 angeordnet, welches an dem Fahrzeugrahmen 18 an einer Stelle gesichert bzw. befestigt ist, welche im Wesentlichen in vertikaler Richtung oberhalb der Welle 16 der Unterlenker 12, 14 angeordneten ist. An dem linken und rechten Ende der Hubwelle 30 ist jeweils ein Hubarm 34 und 36 angebracht. Zwei Hubstreben 38, 40 umfassen obere Enden, welche über horizontal und quer angeordnete Bolzen 42, 44 drehbar an den entsprechenden freien Ende an der Hubarme 34, 36 gekoppelt sind. Die Hubstreben 38, 40 weisen untere Enden auf, welche über horizontal und quer angeordnete Bolzen 46, 48 drehbar an Gabelstücken 50, 52 entsprechend gekoppelt sind, wobei die Gabelstücke 50, 52 gabelförmige untere Enden aufweisen, welche über die horizontal und quer angeordneten Drehbolzen 54, 56 in spreizender Anordnung an die Unterlenker 12, 14 entsprechend gekoppelt sind. Ein rechter und ein linker Hubzylinder 58, 60 umfassen jeweils ein oberes Ende, welches jeweils über die Bolzen 62, 64 drehbar mit den entsprechenden Hubarmen 34, 36 gekoppelt ist. Die Hubzylinder 58, 60 umfassen jeweils ein unteres Ende, welches jeweils über die Bolzen 66, 68 drehbar an dem Fahrzeugrahmen 18 gekoppelt ist.

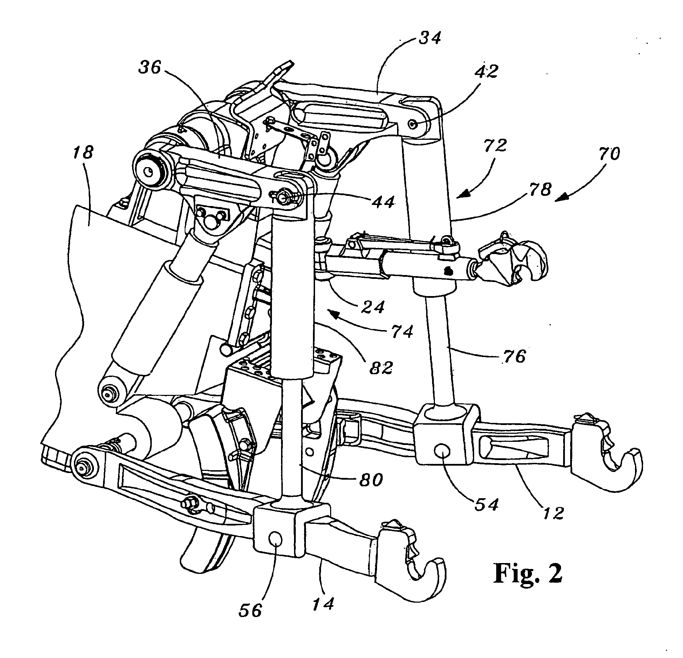

Figur 2 zeigt eine in Form eines Dreipunkt-Geräteaufbaus 70 ausgeführte erfindungsgemäße Kopplungsvorrichtung, wobei gleiche oder ähnliche Bauteile bzw. Baugruppen der Kopplungsvorrichtung aus Figur 1 mit denselben Bezugszeichen gekennzeichnet sind. Der Dreipunkt-Geräteaufbau 70 unterscheidet sich von dem Dreipunkt-Geräteaufbau 10 insbesondere dadurch, dass anstelle der in Figur 1 gezeigten Hubstreben 38, 40 hydraulisch betätigbare Aktuatoren 72, 74 vorgesehen sind. Der hydraulisch betätigbare Aktuator 72 umfasst eine Kolbenstange 76, welche an ihrem unteren Ende einen U-Bügel aufweist, welcher mit Hilfe des Bolzens 54 an dem Unterlenker 12 gekoppelt ist. Der hydraulisch betätigbare Aktuator 72 umfasst einen Zylinder 78 mit einem oberen Ende, welches zwischen gegenüberliegenden Henkeln eines gabelförmigen Endes des rechten Hubarms 34 angeordnet ist und über den Bolzen 42 hiermit gekoppelt ist. Dementsprechend weist der Aktuator 74 eine Kolbenstange 80 auf, welche ein durch einen U-Bügel definiertes unteres Ende umfasst und welches mit dem Unterlenker 14 über den Drehbolzen 56 gekoppelt ist. Der Aktuator 74 umfasst einen Zylinder 82 mit einem oberen Ende, welches zwischen gegenüberliegenden Henkeln eines gabelförmigen Endes des Hubarms 36 angeordnet und hiermit über den Bolzen 44 gekoppelt ist.

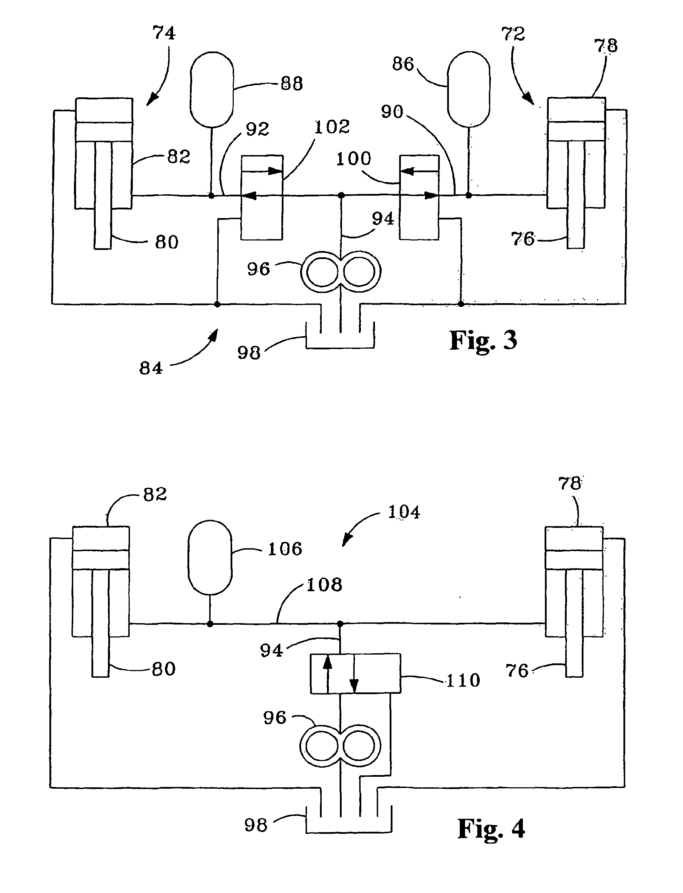

Figur 3 zeigt ein erstes Ausführungsbeispiel einer Ansteuerschaltung 84, welche einen rechten und einen linken Hydraulikspeicher bzw. Hydrospeicher 86, 88 aufweist, welche jeweils mit dem Kolbenstangenraum der Hydraulikzylinder 78, 82 über die entsprechenden Abzweigungen 90, 92 gekoppelt sind, wenn eine Versorgungsleitung 94 mit einer Versorgungspumpe 96 gekoppelt ist, wobei die Versorgungspumpe 96 einen Einlass aufweist, welcher mit einem Sumpf oder einem Tank 98 gekoppelt ist. Ein linkes und ein rechtes, lediglich schematisch angedeutetes Ansteuerventil 100, 102 ist jeweils in den Abzweigungen 90, 92 zwischen der Pumpe 96 und dem entsprechenden Hydrospeicher 86, 88 angeordnet.

Figur 4 zeigt in einem zweiten Ausführungsbeispiel einen Ansteuerkreislauf 104. Der Ansteuerkreislauf 104 ist eine vereinfachte Ausführung des Ansteuerkreislaufs 84 aus Figur 3, wobei lediglich ein Hydrospeicher 106 und eine Abzweigungsleitung 108 vorgesehen ist. Die Abzweigungsleitung 108 ist an die Versorgungsleitung 94 und mit seinen gegenüberliegenden Enden an dem Kolbenstangenraum des jeweiligen hydraulisch betätigbaren Aktuators 72, 74 gekoppelt. Der Ansteuerkreislauf 104 umfasst weiterhin ein lediglich schematisch angedeutetes Ansteuerventil 110, welches in der Versorgungsleitung 94 zwischen der Pumpe 96 und der Abzweigungsleitung 108 angeordnet ist.

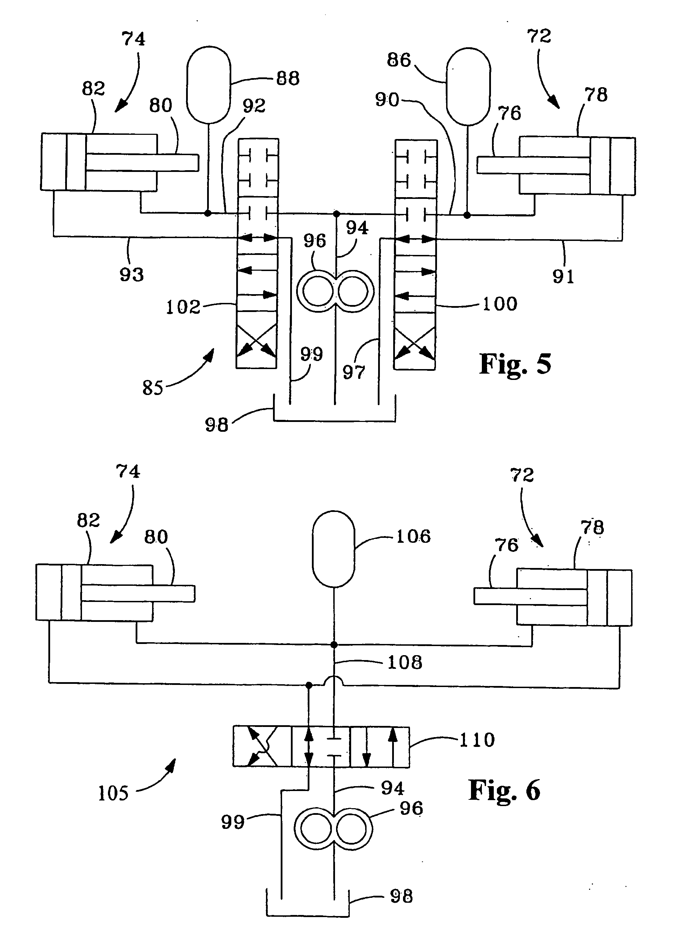

Figur 5 zeigt in einem dritten Ausführungsbeispiel einen Ansteuerkreislauf 8 zur Ansteuerung der Hydraulikaktuatoren 72, 74. Der Ansteuerkreislauf 85 umfasst einen rechten Hydrospeicher 86, welcher mit dem Kolbenstangenraum des Aktuators 72 über eine Versorgungs-/Rückflussleitung 90 verbunden ist. Weiterhin umfasst der Ansteuerkreislauf 85 einen in linken Hydrospeicher 88, der mit dem Kolbenstangenraum des Aktuators 74 über eine Versorgungs-/Rückflussleitung 92 verbunden ist. Eine rechte Versorgungs-/Rückflussleitung 91 ist mit dem Kolbenraum des Aktuators 72 verbunden, eine weitere linken Versorgungs-/Rückflussleitung 93 ist mit dem Kolbenraum des Aktuators 74 verbunden. Eine Versorgungsleitung 94 für unter Druck stehende Flüssigkeit ist mit dem Auslass der Versorgungspumpe 96 verbunden, wobei die Versorgungspumpe 96 einen Einlass aufweist, welcher mit einem Sumpf oder einem Tank 98 gekoppelt ist. Ein rechtes 4/4-Wege-Ansteuerventil 100 umfasst einen Satz von Versorgungs-/Rückflussleitungsanschlüssen, welche in entsprechender Weise mit den Versorgungs-/Rückflussleitungen 90, 91 verbunden sind, und umfasst einen Zuleitungsanschluss und einen Rückflussleitungsanschluss, welche jeweils mit einer ersten Abzweigung der Versorgungsleitung 94 und mit der sich zum Sumpf 98 erstreckenden Rückflussleitung 97 verbunden sind. In ähnlicher Weise ist ein linkes 4/4-Wege-Ansteuerventil 102 vorgesehen, welches einen Satz von Versorgungs-/Rückflussleitungsanschlüsse aufweist, welche mit den Versorgungs-/Rückflussleitungen 92, 93 verbunden sind, und welches einen Versorgungsanschluss und einen Rückflussanschluss aufweist, welche mit einer zweiten Abzweigung der Versorgungsleitung 94 und mit der sich zum Sumpf 98 erstreckenden Rückflussleitung 99 verbunden sind.

Figur 6 zeigt in einem vierten Ausführungsbeispiel einen Ansteuerkreislauf 105. Der Ansteuerkreislauf 105 ist eine Vereinfachung des Ansteuerkreislaufs 85 dahingehend, dass nur ein Hydrospeicher 106 und nur ein Ansteuerventil 110 vorgesehen ist, welches in Form eines 4/3- Wege-Ansteuerventils ausgeführt ist, welches verglichen zu den Ventilen 100 und 102 eine Funktion weniger aufweist. Insbesondere ist der Hydrospeicher 106 mit einer abgezweigten Versorgungs-/Rückflussleitung 108 verbunden, welche zwischen einem Versorgungs-/Rückflussleitungsanschluss des Ansteuerventils 110 und den Kolbenstangenräumen der Aktuatoren 72, 74 angeordnet ist. Die Versorgungsleitung 94 ist zwischen dem Auslass der Versorgungspumpe 96 und einem Versorgungsleitungsanschluss des Ventils 110 angeordnet, die Rückflussleitung 99 ist zwischen dem Sumpf 98 und einem Rückflussleitungsanschluss des Ventils 110 angeordnet.

Im Folgenden wird angenommen, dass der Dreipunkt-Geräteaufbau 70 mit einem Arbeitsgerät, beispielsweise einem großflächigen Mähwerk oder dergleichen, verbunden ist und dass der Ansteuerkreislauf 85 gemäß Figur 5 eingesetzt wird. Wenn der Einsatzort erreicht ist, wird das in den Figuren nicht gezeigte Servoventil zur Ansteuerung der Hubzylinder 58, 60 betätigt, um das Arbeitsgerät abzusenken und die Aktuatoren 72, 74 in einen Ausgleichsbewegungszustand zu versetzen. Die bis dahin in einer gesperrten Position - welche der oberen Ventilstellung der Ansteuerventile 100, 102 entspricht - befindlichen Ansteuerventile 100, 102 werden jeweils in eine in der Figur 5 gezeigte Arbeitsposition verbracht. Der Zulauf und der Ablauf des Flüssigkeitsflusses des Kolbenstangenraums der Aktuatoren 72, 74 wird dann verhindert, wobei eine Anhebekraft gegeben ist, welche durch den Druck in den Hydrospeichern 86, 88 festgelegt ist und welche zum Ausgleich bzw. zur teilweisen Aufnahme des Gewichts des Arbeitsgeräts dient. Die Pumpe 96 könnte - insbesondere bei Ansteuerschaltungen gemäß den Figuren 3 bis 6 - beispielsweise in Form einer Verstellpumpe ausgeführt sein, wobei die Verstellpumpe derart eingestellt wird, dass die Fördermenge der Pumpe 96 dann nahezu Null ist, wenn die Ansteuerventile 100, 102 den Flüssigkeitsfluss zu den Aktuatoren 72, 74 verhindern. Eine Konstantpumpe könnte ebenfalls verwendet werden, die Ansteuerventile 100, 102 müssten in diesem Fall jedoch durch Ventile ersetzt werden, welche einen Rückfluss zum Sumpf 98 zur Verfügung stellen, wenn die Ansteuerventile sich in einer Position befinden, in welcher der Flüssigkeitsfluss zu den Aktuatoren 72, 74 verhindert ist. Üblicherweise wird der vorgesehene bzw. gewünschte Druck, welcher von den Hydrospeichern 86, 88 angewandt wird, derart bemessen sein, dass lediglich ein geringer Gewichtsanteil des Arbeitsgeräts während des Betriebs auf den Untergrund wirkt. Falls die Gewichtsverteilung des Arbeitsgeräts von der einen zur anderen Seite - insbesondere bezüglich der Fahrzeugquerachse - nicht ausgeglichen ist, werden die Hydrospeicher 86, 88 mit unterschiedlichen Drücken eingestellt, so dass während des Betriebs ein Ausgleich des auf den Untergrund wirkenden Drucks von einer zur anderen Seite des Arbeitsgeräts erzielt wird. Während des Betriebs führen Welligkeiten in der bearbeiteten Oberfläche zur Unterstützung des Arbeitsgeräts, üblicherweise in Form von Sprüngen oder dergleichen, so dass das Arbeitsgerät der Kontur des Untergrunds folgt, wobei Flüssigkeit von den Kolbenräumen der Zylinder 78, 82 zum Sumpf 98 verbracht wird, falls die Kolbenstangen 76, 80 nach oben ausgelenkt werden, und wobei Flüssigkeit in die Kolbenräume der Zylinder 78, 82 verbracht wird, wenn die Kolbenstangen 76, 80 nach unten ausgelenkt werden. Der Grad der Anhebekraft bzw. des zur Verfügung gestellten Ausgleichgewichts, welcher von den Hydrospeichern 88, 86 bewirkt wird, kann dadurch erhöht werden, dass die Ventile 100, 102 von der in der Figur gezeigten Arbeitsposition - auch unabhängig voneinander - um eine Position nach oben verbracht werden, in welcher der Kolbenstangenraum mit der Versorgungspumpe 96 und der Kolbenraum mit dem Sumpf 98 verbunden sind. Der von den Hydrospeichern 88, 86 bewirkte Grad der Anhebekraft kann durch das Verbringen der Ventile 100, 102 in ihre oberste Position erzielt werden, in welcher die Kolbenstangenräume der Aktuatoren 72, 78 mit dem Sumpf 98 und in welcher die Kolbenräume mit der Versorgungspumpe 96 verbunden sind. Falls es gewünscht ist, jegliche Bewegung der Kolbenstangen 76, 80 zu blockieren, werden die Ventile 100, 102 in ihre unterste Position verbracht, in welcher der Flüssigkeitsfluss von und zu den Zylindern 78, 82 verhindert wird. Die Funktionsweise der Ansteuerschaltung 105 ist grundsätzlich die gleiche wie die der Ansteuerschaltung 85, wobei jedoch hier nur ein Hydrospeicher 106 verwendet wird, so dass kein seitlicher Ausgleich für Gewichtsunterschiede des Arbeitsgeräts der gegenüberliegenden Seiten bezüglich der mittleren Arbeitsgerätelängsachse vorgesehen ist. Darüber hinaus umfasst das Ansteuerventil 110 keine Sperrfunktion. In jedem Fall werden die Zylinder der Aktuatoren 72, 74 mit Druck beaufschlagt, so dass eine Hubbewegung der Hubarme 34, 36 erzielt wird, wodurch die Unterlenker 12, 14 mit Hilfe der Aktuatoren 72, 74 angehoben werden, falls es gewünscht sein sollte, das Arbeitsgerät zum Transport anzuheben.

Dementsprechend wird betont, dass durch eine einfache Modifikation eines konventionellen Dreipunkt-Geräteanbaus 10 zu einem Dreipunkt-Geräteanbau bzw. zu einer erfindungsgemäßen Kopplungsvorrichtung führt, welche individuelle vorgespannte bzw. gefederte Unterlenker aufweist, welche geeignet sind ein großflächig wirkendes Arbeitsgerät zu betreiben. Eine solche Modifikation erfolgt in Form einer Ersetzung von Hydraulikaktuatoren anstelle der Hubstreben und das Vorsehen einer Ansteuerschaltung, welche mindestens einen Hydrospeicher aufweist, so dass diese Aktuatoren die gewünschten Vorspannungs- bzw. Federcharakteristiken aufweisen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kopplungsvorrichtung, insbesondere ein Dreipunkt-Geräteaufbau für ein landwirtschaftliches oder industrielles Nutzfahrzeug, mit einem Rahmen (18), mit zwei Unterlenkern (12, 14), welche zum Drehen/Schwenken im Wesentlichen in vertikaler Richtung um eine erste horizontal angeordnete Achse an dem Rahmen (18) angebracht sind, mit einer Hubwelle (30), welche zur Rotation/Drehung - vorzugsweise im Wesentlichen in vertikaler Richtung - um eine zweite horizontal angeordnete Achse an dem Rahmen (18) angebracht ist, wobei die zweite Achse in vertikaler Richtung von der ersten Achse beabstandet angeordnet ist, mit zwei Hubarmen (34, 36), welche in Querrichtung an unterschiedlichen Stellen mit der Hubwelle (30) verbunden sind, mit zwei Hubstreben (38, 40), welche jeweils mit ihrem oberen Ende drehbar an den entsprechenden Hubarmen (34, 36) und mit ihren unteren Enden jeweils an den entsprechenden Unterlenkern (12, 14) koppelbar sind, und mit einer Anhebeeinrichtung, welche zwischen dem Rahmen (18) und der Hubwelle (30) zum selektiven Anheben und Absenken der Unterlenker (12, 14) durch eine selektierte Rotation/Drehung der Hubwelle (30) vorgesehen ist, wobei die Hubstreben ausfahrbare und einfahrbare Hydraulikaktuatoren (72, 74) aufweisen, **dadurch gekennzeichnet, dass** eine Ansteuerschaltung (84, 85, 104, 105) vorgesehen ist, welche mit den Hydraulikaktuatoren (72, 74) gekoppelt ist und welche eine Hydrospeicheranordnung (86, 88, 106) aufweist, welche ausgebildet ist, einem Ausfahren des Hydraulikaktuators (72, 74) entgegenzuwirken, und somit einer Abwärtsbewegung der Unterlenker (12, 14) entgegenzuwirken.

2. Kopplungsvorrichtung nach Anspruch 1, **dadurch gekennzeichnet, dass** die Hydrospeicheranordnung (86, 88; 106) mindestens einen Hydrospeicher (86, 88; 106) aufweist.

3. Kopplungsvorrichtung nach Anspruch 1 oder 2, **dadurch gekennzeichnet, dass** die Hydrospeicheranordnung (86, 88; 106) mit dem Kolbenstangenraum eines jeden Aktuators (72, 74) koppelbar ist und dass mit der Hydrospeicheranordnung (86, 88; 106) vorzugsweise ein Gewichtsausgleich eines von den Unterlenkern getragenen Arbeitsgeräts erzielbar ist.

4. Kopplungsvorrichtung nach Anspruch 2, **dadurch gekennzeichnet, dass** die Ansteuerschaltung (84, 85) einen zweiten Hydrospeicher (88) aufweist, dass vorzugsweise der erste Hydrospeicher (86) nur mit dem ersten Aktuator (72) koppelbar ist und dass vorzugsweise der zweite Hydrospeicher (88) nur mit dem zweiten Aktuator (74) koppelbar ist.

5. Kopplungsvorrichtung nach einem der vorhergehenden Ansprüche, **dadurch gekennzeichnet, dass** die Ansteuerschaltung (84, 85) eine Flüssigkeitsdruckquelle (96) sowie erste und zweite Ansteuerventile (100, 102) aufweist, wobei die Ansteuerventile (100, 102) mit der Flüssigkeitsdruckquelle (96) und entsprechend mit dem ersten und dem zweiten Hydraulikaktuator (72, 74) koppelbar sind.

6. Kopplungsvorrichtung nach einem der vorhergehenden Ansprüche, **dadurch gekennzeichnet, dass** ein Verbindungselement (20) vorgesehen ist, welches in einer mittleren Position oberhalb der Unterlenker (12, 14) drehbar an dem Rahmen (18) angebracht ist.

7. Kopplungsvorrichtung nach einem der vorhergehenden Ansprüche, **dadurch gekennzeichnet, dass** die Ansteuerschaltung (84, 85; 104, 105) eine Flüssigkeitsdruckquelle (96), einen Sumpf (98), und eine Ansteuerventileinheit (100, 102; 110) aufweist, wobei die Ansteuerventileinheit (100, 102; 110) mit der Flüssigkeitsdruckquelle (96), dem Sumpf (98) und der Hydrospeicheranordnung (86, 88; 106) koppelbar ist und wobei mit der Ansteuerventileinheit (100, 102; 110) ein Betriebszustand herstellbar ist, bei welchem die Hydrospeicheranordnung (86, 88; 106) von dem Sumpf (98) und von der Flüssigkeitsdruckquelle (96) isolierbar ist und bei welchem die Kolbenräume der Aktuatoren (72, 74) mit dem Sumpf (98) verbindbar sind.

8. Kopplungsvorrichtung nach einem der vorhergehenden Ansprüche, **dadurch gekennzeichnet, dass** mit der Ansteuerventileinheit (100, 102; 110) ein Betriebszustand herstellbar ist, bei welchem ein Belade- oder Entladezustand vorliegt, und bei welchem der Druck in der Hydrospeicheranordnung (86, 88; 106) erhöhbar oder verringerbar ist.

9. Kopplungsvorrichtung nach einem der vorhergehenden Ansprüche, **dadurch gekennzeichnet, dass** mit der Ansteuerventileinheit (86, 88) ein Betriebszustand herstellbar ist, welcher eine Sperrfunktion aufweist, bei welchem ein Flüssigkeitsfluss von und zu den Hydraulikaktuatoren (72, 74) verhinderbar ist.

10. Kopplungsvorrichtung nach einem der vorhergehenden Ansprüche, **dadurch gekennzeichnet, dass** die Ansteuerventileinheit Ansteuerventile (100, 102) aufweist, welche jeweils mit der Flüssigkeitsdruckquelle (96) und dem Sumpf (98) koppelbar sind, wobei ein Ansteuerventil (100) mit einem Hydrospeicher (86) und mit dem ersten Aktuator (72) koppelbar ist, und wobei ein weiteres Ansteuerventil (102) mit einem weiteren Hydrospeicher (88) und mit dem zweiten Aktuator (74) koppelbar ist.

## Claims

1. Coupling device, in particular a three-point appliance mount for an agricultural or industrial utility vehicle, with a frame (18), with two lower links (12, 14) which are attached to the frame (18) for rotating/pivoting essentially in a vertical direction about a first horizontally arranged axis, with a lifting shaft (30) which is attached to the frame (18) for turning/rotating, preferably essentially in a vertical direction, about a second horizontally arranged axis, the second axis being arranged, spaced apart from the first axis in the vertical direction, with two lifting arms (34, 36) which are connected to the lifting shaft (30) at different locations in the transverse direction, with two lifting struts (38, 40) which can be coupled in each case with their upper end rotatably to the corresponding lifting arms (34, 36) and in each case with their lower ends to the corresponding lower links (12, 14), and with a raising arrangement which is provided between the frame (18) and the lifting shaft (30) for selectively raising and lowering the lower links (12, 14) by means of a selected turning/rotation of the lifting shaft (30), the lifting struts having extendable and retractable hydraulic actuators (72, 74), **characterized in that** an activation circuit (84, 85, 104, 105) is provided, which is coupled to the hydraulic actuators (72, 74) and which has an hydraulic accumulator arrangement (86, 88, 106) which is designed to counteract an extension of the hydraulic actuator (72, 74) and therefore to counteract a downward movement of the lower links (12, 14).

2. Coupling device according to Claim 1, **characterized in that** the hydraulic accumulator arrangement (86, 88; 106) has at least one hydraulic accumulator (86, 88; 106).

3. Coupling device according to Claim 1 or 2, **characterized in that** the hydraulic accumulator arrangement (86, 88; 106) can be coupled to the piston-rod space of each actuator (72, 74), and **in that** preferably a compensation of the weight of a working appliance carried by the lower links can be achieved by means of the hydraulic accumulator arrangement (86, 88; 106).

4. Coupling device according to Claim 2, **characterized in that** the activation circuit (84, 85) has a second hydraulic actuator (88), **in that** preferably the first hydraulic actuator (86) can be coupled only to the first actuator (72), and **in that** preferably the second hydraulic actuator (88) can be coupled only to the second actuator (74).

5. Coupling device according to one of the preceding claims, **characterized in that** the activation circuit (84, 85) has a fluid-pressure source (96) and also first and second activation valves (100, 102), the activation valves (100, 102) being coupleable to the fluid-pressure source (96) and correspondingly to the first and to the second hydraulic actuator (72, 74).

6. Coupling device according to one of the preceding claims, **characterized in that** a connection element (20) is provided, which is attached rotatably to the frame (18) in a middle position above the lower links (12, 14).

7. Coupling device according to one of the preceding claims, **characterized in that** the activation circuit (84, 85; 104, 105) has a fluid-pressure source (96), a sump (98) and an activation-valve unit (100, 102; 110), the activation-valve unit (100, 102; 110) being coupleable to the fluid-pressure source (96), to the sump (98) and to the hydraulic accumulator arrangement (86, 88; 106), and the activation-valve unit (100, 102; 110) being capable of producing an operating state in which the hydraulic accumulator arrangement (86, 88; 106) can be isolated from the sump (98) and from the fluid-pressure source (96), and in which the piston spaces of the actuators (72, 74) can be connected to the sump (98).

8. Coupling device according to one of the preceding claims, **characterized in that** the activation-valve unit (100, 102; 110) is capable of producing an operating state in which a loading or unloading state prevails, and in which the pressure in the hydraulic accumulator arrangement (86, 88; 106) can be increased or can be reduced.

9. Coupling device according to one of the preceding claims, **characterized in that** the activation-valve unit (86, 88) is capable of producing an operating state which has a blocking function in which a fluid flow from and to the hydraulic actuators (72, 74) can be prevented.

10. Coupling device according to one of the preceding claims, **characterized in that** the activation-valve unit has activation valves (100, 102) which can in each case be coupled to fluid-pressure source (96) and to the sump (98), one activation valve (100) being coupleable to a hydraulic actuator (86) and to the first actuator (72), and a further activation valve (102) being coupleable to a further hydraulic accumulator (88) and to the second actuator (74).

## Revendications

1. Dispositif d'accouplement, notamment une fixation d'appareil en trois points, pour un véhicule utilitaire agricole ou industriel, comprenant un cadre (18), avec deux bras inférieurs (12, 14), qui sont montés sur le cadre (18) de manière à tourner/pivoter essentiellement dans la direction verticale autour d'un premier axe disposé horizontalement, avec un arbre de levage (30) qui est monté sur le cadre (18) pour tourner - de préférence essentiellement dans la direction verticale - autour d'un deuxième axe disposé horizontalement, le deuxième axe étant disposé dans la direction verticale à distance du premier axe, avec deux bras de levage (34, 36), qui sont connectés à l'arbre de levage (30) dans la direction transversale en des points différents, avec deux renforts de levage (38, 40), qui peuvent être couplés à chaque fois par leur extrémité supérieure de manière rotative aux bras de levage correspondants (34, 36) et par leur extrémité inférieure à chaque fois aux bras inférieurs correspondants (12, 14), et avec un dispositif de levage qui est prévu entre le cadre (18) et l'arbre de levage (30) pour soulever et abaisser de manière sélective les bras inférieurs (12, 14) par une rotation sélectionnée de l'arbre de levage (30), les renforts de levage présentant des actionneurs hydrauliques pouvant être sortis et rentrés (72, 74), **caractérisé en ce qu'**il est prévu un circuit de commande (84, 85, 104, 105) qui est couplé aux actionneurs hydrauliques (72, 74) et qui présente un agencement d'accumulateurs hydrauliques (86, 88, 106), qui est réalisé pour s'opposer à une sortie de l'actionneur hydraulique (72, 74) et donc pour s'opposer à un déplacement vers le bas des bras inférieurs (12, 14).

2. Dispositif d'accouplement selon la revendication 1, **caractérisé en ce que** l'agencement d'accumulateurs hydrauliques (86, 88 ; 106) présente au moins un accumulateur hydraulique (86, 88 ; 106).

3. Dispositif d'accouplement selon la revendication 1 ou 2, **caractérisé en ce que** l'agencement d'accumulateurs hydrauliques (86, 88 ; 106) peut être couplé à l'espace de tige de piston de chaque actionneur (72, 74) et **en ce que** l'on peut obtenir avec l'agencement d'accumulateurs hydrauliques (86, 88 ; 106) de préférence un équilibrage du poids d'un appareil de travail porté par les bras inférieurs.

4. Dispositif d'accouplement selon la revendication 2, **caractérisé en ce que** le circuit de commande (84, 85) présente un deuxième accumulateur hydraulique (88), **en ce que** de préférence le premier accumulateur hydraulique (86) ne peut être couplé qu'au premier actionneur (72) et **en ce que** de préférence le deuxième accumulateur hydraulique (88) ne peut être couplé qu'au deuxième actionneur (74).

5. Dispositif d'accouplement selon l'une quelconque des revendications précédentes, **caractérisé en ce que** le circuit de commande (84, 85) présente une source de liquide sous pression (96) ainsi que des première et deuxième soupapes de commande (100, 102), les soupapes de commande (100, 102) pouvant être couplées à la source de liquide sous pression (96) et par conséquent au premier et au deuxième actionneur hydraulique (72, 74).

6. Dispositif d'accouplement selon l'une quelconque des revendications précédentes, **caractérisé en ce qu'**un élément de connexion (20) est prévu, lequel est monté à rotation sur le cadre (18) dans une position centrale au-dessus des bras inférieurs (12, 14).

7. Dispositif d'accouplement selon l'une quelconque des revendications précédentes, **caractérisé en ce que** le circuit de commande (84, 85 ; 104, 105) présente une source de liquide sous pression (96), un puisard (98), et une unité de soupape de commande (100, 102 ; 110), l'unité de soupape de commande (100, 102 ; 110) pouvant être couplée à la source de liquide sous pression (96), au puisard (98) et à l'agencement d'accumulateurs hydrauliques (86, 88 ; 106), et un état fonctionnel pouvant être créé avec l'unité de soupape de commande (100, 102 ; 110), dans lequel l'agencement d'accumulateurs hydrauliques (86, 88 ; 106) peut être isolé du puisard (98) et de la source de liquide sous pression (96) et dans lequel les espaces de piston des actionneurs (72, 74) peuvent être connectés au puisard (98).

8. Dispositif d'accouplement selon l'une quelconque des revendications précédentes, **caractérisé en ce qu'**un état fonctionnel peut être créé avec l'unité de soupape de commande (100, 102 ; 110), dans lequel un état de chargement ou de déchargement est présent, et dans lequel la pression dans l'agencement d'accumulateurs hydrauliques (86, 88 ; 106) peut être augmentée ou réduite.

9. Dispositif d'accouplement selon l'une quelconque des revendications précédentes, **caractérisé en ce qu'**un état fonctionnel peut être créé avec l'unité de soupape de commande (86, 88) lequel présente une fonction de blocage et dans lequel un flux de liquide vers et depuis les actionneurs hydrauliques (72, 74) peut être empêché.

10. Dispositif d'accouplement selon l'une quelconque des revendications précédentes, **caractérisé en ce que** l'unité de soupape de commande présente des soupapes de commande (100, 102) qui peuvent être à chaque fois couplées à la source de liquide sous pression (96) et au puisard (98), une soupape de commande (100) pouvant être couplée à un accumulateur hydraulique (86) et au premier actionneur (72), et une autre soupape de commande (102) pouvant être couplée à un autre accumulateur hydraulique (88) et au deuxième actionneur (74).
